# EUROPEAN PATENT SPECIFICATION

(11) **EP 1 629 644 B1**
(45) Date of publication and mention of the grant of the patent: **12.09.2007**
(21) Application number: 04751905.3
(22) Date of filing: 12.05.2004
(51) Int. Cl.: H04L 12/56

(54) **METHOD AND SYSTEM FOR MAINTENANCE OF PACKET ORDER USING CACHING**
VERFAHREN UND SYSTEM UM DIE REIHENFOLGE VON PAKETEN MIT HILFE EINES ZWISCHENSPEICHERS ZU GEWÄHRLEISTEN
PROCEDE ET SYSTEME PERMETTANT DE PRESERVER L'ORDRE DES PAQUETS PAR LA MISE EN MEMOIRE CACHE

(30) Priority: 28.05.2003 US 447492
(43) Date of publication of application: 01.03.2006
(73) Proprietor: INTEL CORPORATION, Santa Clara, CA 95052 (US)
(72) Inventor: KUMAR, Alok, Santa Clara, CA 95050 (US); YAVATKAR, Raj, Hillsboro, OR 97229 (US)
(74) Representative: Dunlop, Hugh Christopher
(86) International application number: PCT/US2004/014739
(87) International publication number: WO 2004/107684

(56) References cited:
- EP-A- 1 296 485
- WO-A-03/043272
- US-A1- 2003 021 269
- US-A1- 2003 058 878

## Description

### BACKGROUND

### 1. Technical Field

Embodiments of the invention relate to the field of packet ordering, and more specifically to maintenance of packet order using caching.

### 2. Background Information and Description of Related Art

In some systems, packet ordering criteria require the packets of a flow to leave the system in the same order as they arrived in the system. A possible solution is to use an Asynchronous Insert, Synchronous Remove (AISR) array. Every packet is assigned a sequence number when it is received. The sequence number can be globally maintained for all packets arriving in the system or it can be maintained separately for each port or flow.

The AISR array maintained is a shared memory (e.g. SRAM) and is indexed by the packet sequence number. For each flow, there is a separate AISR array. When the packet processing pipeline has completed the processing on a particular packet, it passes the packet to the next stage, or the re-ordering block. The re-ordering block uses the AISR array to store out-of-order packets and to pick packets in the order of the sequence number assigned.

One problem with this setup is that when the next packet in the flow is not yet ready for processing, the system must continue to poll the AISR list. There is also latency with the memory accesses required to retrieve the packets in the flow that are ready and waiting to be processed in the required order. EP 1,296,485 (Broadcom Corporation) discloses a system and method for hardware based reassembly of a fragmented packet. The method includes storing received fragments in an external memory until all fragments of a particular session are received. Once a last flag indicates that all fragments are received, a reassembly processor reassembles the fragments by concatenating the correctly sequenced fragments.

WO 03/043272 (Transwitch Corporation) discloses a method of buffering packets in a packet switching network in which packets received from the network are split into a plurality of packet data units (PDU's), striping some of these over a plurality of memory banks, retrieving these PDU's from the memory banks and at least temporarily storing the retieved PDU's in the sequence in which they are to be transmitted.

### BRIEF DESCRIPTION OF DRAWINGS

The invention may best be understood by referring to the following description and accompanying drawings that are used to illustrate embodiments of the invention. In the drawings:
**FIG. 1** is a block diagram illustrating one generalized embodiment of a system incorporating the invention.
**FIG. 2** is a flow diagram illustrating a method according to an embodiment of the invention.
**FIG. 3** is a block diagram illustrating a suitable computing environment in which certain aspects of the illustrated invention may be practiced.

### DETAILED DESCRIPTION

Embodiments of a system and method for maintenance of packet order using caching are described. In the following description, numerous specific details are set forth. However, it is understood that embodiments of the invention may be practiced without these specific details. In other instances, well-known circuits, structures and techniques have not been shown in detail in order not to obscure the understanding of this description.

Reference throughout this specification to "one embodiment" or "an embodiment" means that a particular feature, structure, or characteristic described in connection with the embodiment is included in at least one embodiment of the invention. Thus, the appearances of the phrases "in one embodiment" or "in an embodiment" in various places throughout this specification are not necessarily all referring to the same embodiment. Furthermore, the particular features, structures, or characteristics may be combined in any suitable manner in one or more embodiments.

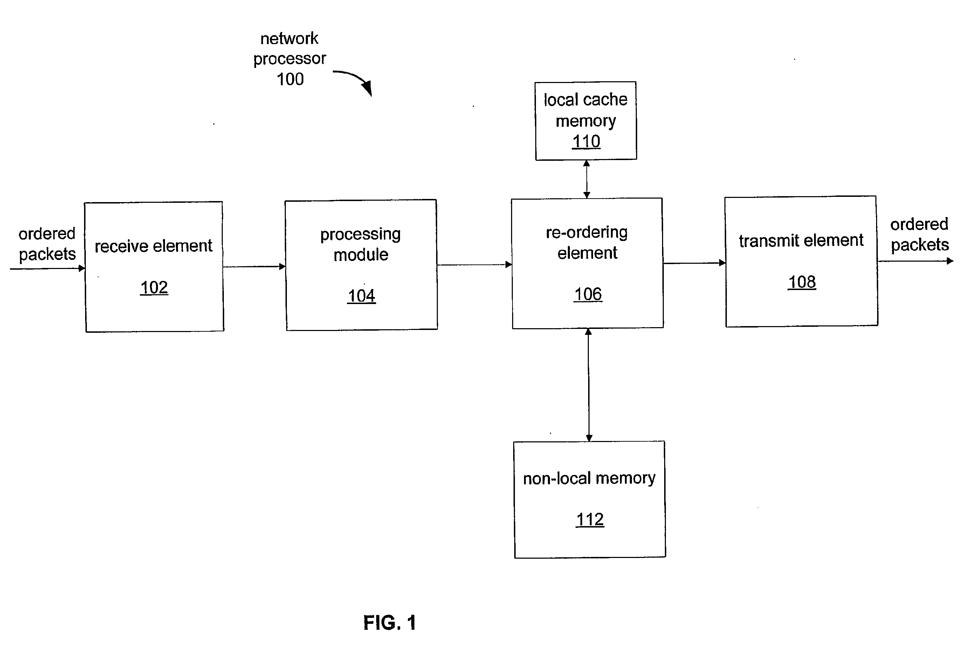

Referring to Fig. 1, a block diagram illustrates a network processor 100 according to one embodiment of the invention. Those of ordinary skill in the art will appreciate that the network processor 100 may include more components than those shown in Fig. 1. However, it is not necessary that all of these generally conventional components be shown in order to disclose an illustrative embodiment for practicing the invention. In one embodiment, the network processor is coupled to a switch fabric via a switch interface.

The network processor 100 includes a receive element 102 to receive packets from a network. The received packets may be part of a sequence of packets. Network processor 100 includes one or more processing modules 104. The processing modules process the received packets. Some processing modules may process the packets of a sequence in the proper order, while other processing modules may process the packets out of order.

After the packets are processed, a re-ordering element 106 sorts the packets that belong to a sequence into the proper order. When the re-ordering element 106 receives a packet from a processing module, it determines if the received packet is the next packet in the sequence to be transmitted. If so, the packet is transmitted or queued to be transmitted by transmitting element 108. If not, then the re-ordering element 106 determines whether the packet fits into a local cache memory 110. If so, the packet is stored in the local cache memory 110. Otherwise, the packet is stored in a non-local memory 112. In one embodiment, the non-local memory 112 is a Static Random Access Memory (SRAM). In one embodiment, the network processor includes a Dynamic Random Access Memory (DRAM) coupled to the processing modules to store data.

When the stored packet is the next packet in the sequence to be transmitted, the packet is retrieved by the re-ordering element 106 from memory and transmitted by the transmitting element 108. As the re-ordering element 106 retrieves packets from the local cache memory 110 to be transmitted, the re-ordering element 106 copies packets that are stored in the non-local memory 112 into the local cache memory 110.

In one embodiment, each packet belonging to a sequence is given a sequence number when entering the receive element 102 to label the packet for re-ordering. After packets are processed by the processing module 104, the packets are inserted by the re-ordering element 106 into an array. In one embodiment, the array is an Asynchronous Insert, Synchronous Remove (AISR) array. The position to which the packet is inserted into the array is based on the packet sequence number. For example, the first packet in the sequence is inserted into the first position in the array, the second packet in the sequence is inserted into the second position in the array, and so on. The re-ordering element 106 retrieves packets from the array in order, and the transmit element 108 transmits the packets to the next network destination.

In one embodiment, the implementation of packet ordering assumes the AISR array in the memory to be big enough such that sequence numbers should not usually wrap around, and the new packet should not over-write an old, but valid packet because of this. However, if such a situation occurs, the re-ordering element should not wait infinitely long. Therefore, in one embodiment, packets carry sequence numbers that have more bits than are used to represent the maximum sequence number in the memory (max_seq_num). This will allow identification of any wrapping around in the AISR array. If a packet arrives such that its sequence number is greater than or equal to (expected_seq_num + max_seq_num), then the re-ordering element stops accepting any new packets. Meanwhile, if the packet with expected_seq_num is available, it will be processed or be assumed dropped and expected_seq_num will be incremented. This will go on until the packet that has arrived fits in the AISR array. The re-ordering element will start accepting new packets after this. It should be noted that this state should not be practically executed and the maximum sequence number in memory should be big enough to not allow this condition to run.

In one embodiment, if a packet is dropped during packet processing, a notification is sent to the re-ordering element. This notification may be a stub of the packet. In one embodiment, if a new packet is generated during packet processing, the new packet may be marked to indicate to the re-ordering element that the new packet need not be ordered. In one embodiment, if a new packet is generated during packet processing, the new packet shares the same sequence number as the packet from which it was generated. The packets will have a shared data structure to indicate the number of copies of the sequence number. The re-ordering element will assume that a packet with a sequence number that has more than one copy has arrived only when all of its copies have arrived.

For illustrative purposes, the following is exemplary pseudo-code for the re-ordering element:

```
 Function: receive_packet()
 seq_num = Extract sequence number from the packet;
 if (seq_num == expected_seq_num)
      {
      process packet;
      expected_seq_num++;
      clear entry corresponding to seq_num from local memory
      and SRAM AISR Array;
      read_from_SRAM() ;
      }
 else
      {
      if (seq_num < (expected_seq_num + N))
           {
           store seq_num in corresponding local memory AISR
      Array;
           look_for_head() ;
           }
      else
           {
           store seq_num in corresponding SRAM AISR Array;
           if ( seq_num > max_seq_num_in_SRAM)
                max_seq_num_in_SRAM = seq_num;
           look_for_head ( ) ;
           }
      }
 Function: look_for_head ()
 if (entry at expected_seq_num is not NULL)
      {
      process expected_seq_num;
      expected_seq_num++;
      clear entry corresponding to seq_num from local memory
      and SRAM AISR Array;
      read_from_SRAM();
      }
 Function: read_from_SRAM()
      {
      if (expected_seq_num % B == 0)
           {
           // perform block_read_if necessary
           if ((max_seq_num_in_SRAM != -1) &
           (max_seq_num_in_SRAM > (expected_seq_num + N)))_
                block read from SRAM AISR Array from
                (expected_seq_num + N) to (expected_seq_num +
                N + B);
           else
                max_seq_num_in_SRAM = -1;
           }
      }
```

The function "receive packet" receives a packet from a packet processing module and processes the packet if the packet is the next packet in the sequence to be transmitted. Otherwise, the packet is inserted into the proper position in the AISR array in the local memory if the packet fits into the AISR array in the local memory. If the packet does not fit into the AISR array in the local memory, then the packet is stored in the AISR array in the SRAM.

The function "look for head" looks for the packet at the head of the AISR array in the local memory. If the packet is there, then the packet is processed and transmitted.

The function "read from SRAM" reads a packet from the AISR array in the SRAM. The packet may then be copied into the local memory when a packet from the AISR array in the local memory is processed.

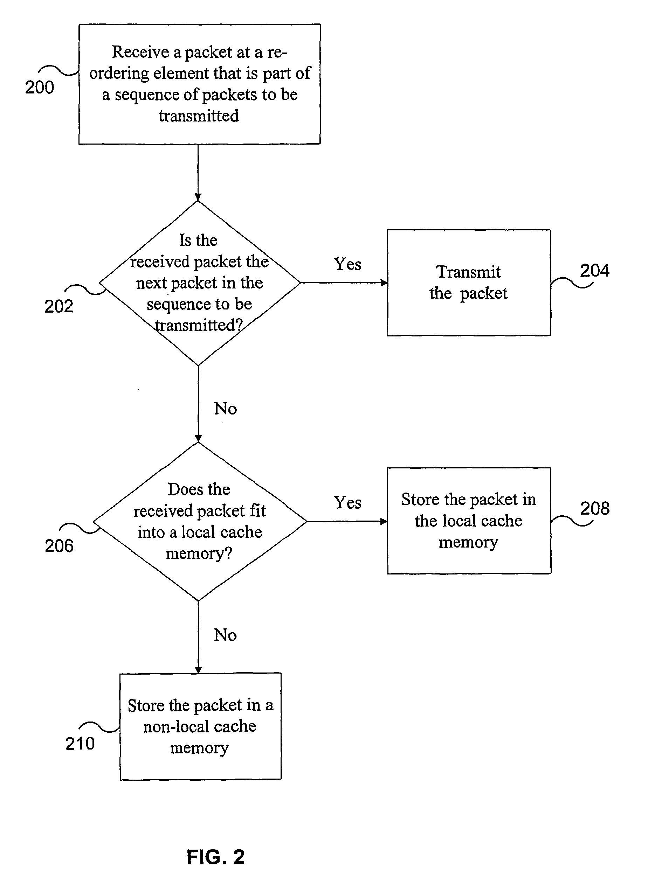

Fig. 2 illustrates a method according to one embodiment of the invention. At 200, a packet that is part of a sequence of packets to be transmitted is received at a re-ordering element. At 202, a determination is made as to whether the received packet is the next packet in the sequence to be transmitted. If so, then at 204, the packet is transmitted. If not, then at 206, a determination is made as to whether the packet fits into a local cache memory. In one embodiment, a determination is made as to whether the packet fits into an AISR array in a local cache memory. If the packet fits into the local cache memory, then at 208, the packet is stored in the local cache memory. If the packet does not fit into the local cache memory, then at 210, the packet is stored in a non-local cache memory. In one embodiment, if the received packet does not fit into the local cache memory, the received packet is stored in a SRAM. In one embodiment, the stored packet is retrieved and transmitted when the stored packet is determined to be the next packet in the sequence to be transmitted.

In one embodiment, the packet is stored in an AISR array in the local cache memory. When the packet reaches the head of the AISR array, the packet is retrieved and transmitted. Then, the packet at the head of the AISR array in the non-local memory may be copied to the AISR array in the local cache memory.

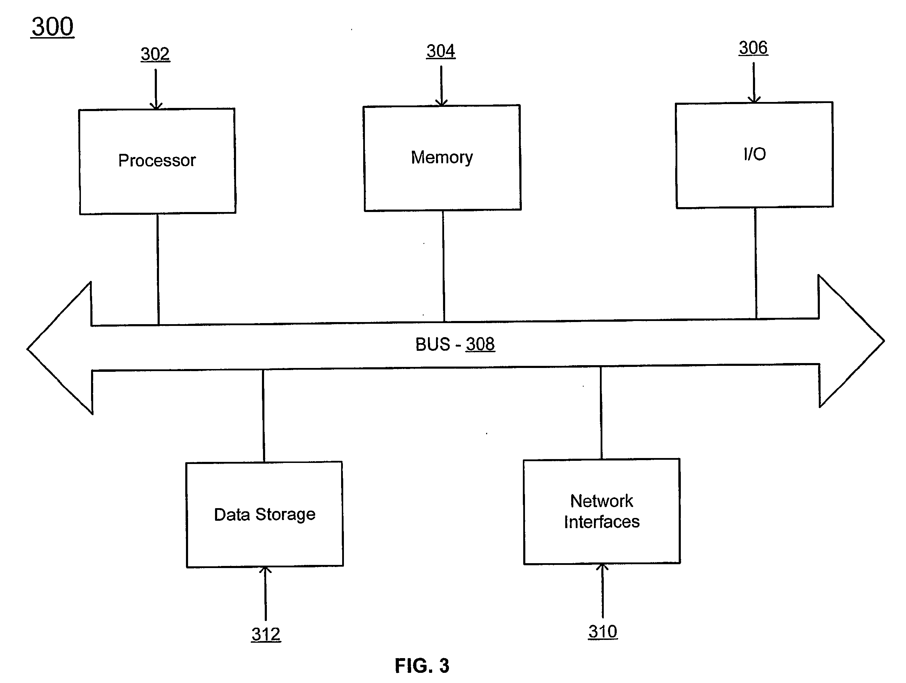

Fig. 3 is a block diagram illustrating a suitable computing environment in which certain aspects of the illustrated invention may be practiced. In one embodiment, the method described above may be implemented on a computer system 300 having components 302 - 312, including a processor 302, a memory 304, an Input/Output device 306, a data storage 312, and a network interface 310, coupled to each other via a bus 308. The components perform their conventional functions known in the art and provide the means for implementing the present invention. Collectively, these components represent a broad category of hardware systems, including but not limited to general purpose computer systems and specialized packet forwarding devices. It is to be appreciated that various components of computer system 300 may be rearranged, and that certain implementations of the present invention may not require nor include all of the above components. Furthermore, additional components may be included in system 300, such as additional processors (e.g., a digital signal processor), storage devices, memories, and network or communication interfaces.

As will be appreciated by those skilled in the art, the content for implementing an embodiment of the method of the invention, for example, computer program instructions, may be provided by any machine-readable media which can store data that is accessible by a system incorporating the invention, as part of or in addition to memory, including but not limited to cartridges, magnetic cassettes, flash memory cards, digital video disks, random access memories (RAMs), read-only memories (ROMs), and the like. In this regard, the system is equipped to communicate with such machine-readable media in a manner well-known in the art.

It will be further appreciated by those skilled in the art that the content for implementing an embodiment of the method of the invention may be provided to the network processor 100 from any external device capable of storing the content and communicating the content to the network processor 100. For example, in one embodiment of the invention, the network processor 100 may be connected to a network, and the content may be stored on any device in the network.

## Claims

1. A method comprising:
receiving (200) at a re-ordering element a packet that is part of a sequence of packets to be transmitted in order to a next network destination;
**characterised by**
determining (202) whether the received packet is a next packet in the sequence to be transmitted, and if so, transmitting (204) the received packet, and if not:
determining (206) whether the received packet fits into a local cache memory;
storing (208) the received packet in the local cache memory if the received packet fits into the local cache memory; and
storing (210) the received packet in a non- local memory if the received packet does not fit into the local cache memory.

2. The method of claim 1, further comprising retrieving and transmitting the stored packet when the stored packet is the next packet in the sequence to be transmitted.

3. The method of claim 1, wherein storing the packet in the local cache memory if the packet fits into the local cache memory comprises storing the packet in an Asynchronous Insert, Synchronous Remove array in the local cache memory if the packet fits into the Asynchronous Insert, Synchronous Remove array in the local cache memory.

4. The method of claim 3, wherein storing the packet in a non-local memory if the packet does not fit into the local cache memory comprises storing the packet in an Asynchronous Insert, Synchronous Remove array in a non-local memory if the packet does not fit into the Asynchronous Insert, Synchronous Remove array in the local cache memory.

5. The method of claim 4, wherein storing the packet in an Asynchronous Insert, Synchronous Remove array in a non local memory comprises storing the packet in an Asynchronous Insert, Synchronous Remove array in a Static Random Access Memory if the packet does not fit into the Asynchronous Insert, Synchronous Remove array in the local cache memory.

6. The method of claim 4, further comprising retrieving the packet at the head of the Asynchronous Insert, Synchronous Remove array in the local cache memory from the Asynchronous Insert, Synchronous Remove array in the local cache memory and transmitting the packet to the next network destination.

7. The method of claim 6, further comprising copying the packet at the head of the Asynchronous Insert, Synchronous Remove array in the non-local memory from the Asynchronous Insert, Synchronous Remove array in the non-local memory to the Asynchronous Insert, Synchronous Remove array in the local cache memory after the packet at the head of the Asynchronous Insert, Synchronous Remove array in the local cache memory is transmitted from the Asynchronous Insert, Synchronous Remove array in the local cache memory to the next network destination.

8. An apparatus comprising:
a processing module (104) to process packets of a sequence received from a network;
a re-ordering element (106) coupled to the processing module (104) to rearrange packets of the sequence before transmission to a next network destination;
a local cache memory (110) coupled to the re-ordering element (106) to store one or more arrays for re-ordering packets; and
a non-local memory (112) coupled to the re-ordering element (106) to store one or more arrays for re-ordering packets when the local cache memory (110) is full;
**characterised in that** the re-ordering element (106) is adapted to determine whether a received packet is a next packet in the sequence to transmit, and if so, to cause the apparatus to transmit the packet, and if not, to cause the apparatus to determine if the packet fits in the local cache memory (110).

9. The apparatus of claim 8, wherein the non-local memory (112) is a Static Random Access Memory.

10. The apparatus of claim 8, wherein the local memory (110) and the non-local memory (112) to store one or more arrays for re-ordering packets comprises the local memory (110) and non-local memory (112) to store one or more Asynchronous Insert, Synchronous Remove arrays for re-ordering packets.

11. The apparatus of claim 8, further comprising a receive element (102) coupled to the processing module (104) to receive packets from the network.

12. The apparatus of claim 8, further comprising a transmit element (108) coupled to the re-ordering element (106) to transmit the reordered packets to the next network destination.

13. An article of manufacture comprising:
a machine accessible medium including content that when accessed by a machine causes the machine to perform all the steps of the method of any one of claims 1,2, 3, 4, 6, and 7.

14. A system comprising:
a switch fabric;
a network processor in accordance with the apparatus of any one of claims 9, 11, or 12, coupled to the switch fabric via a switch fabric interface.

15. The system of claim 14, wherein the network processor further includes a Dynamic Random Access Memory coupled to the processing module to store data.

## Patentansprüche

1. Verfahren, umfassend:
Empfangen (200), an einem Element zur Neuanordnung, eines Pakets, das Teil einer Abfolge von Paketen ist, die der Reihe nach zu einem nächsten Netzwerkbestimmungsort gesendet werden sollen;
**gekennzeichnet durch**
Bestimmen (202), ob das empfangene Paket ein nächstes Paket in der Abfolge ist, das gesendet werden soll, und wenn dies der Fall ist, Senden (204) des empfangenen Pakets, und wenn dies nicht der Fall ist,
Bestimmen (206), ob das empfangene Paket in einen lokalen Pufferspeicher passt;
Speichern (208) des empfangenen Pakets im lokalen Pufferspeicher, wenn das empfangene Paket in den lokalen Pufferspeicher passt; und
Speichern (210) des empfangenen Pakets in einem nicht lokalen Speicher, wenn das empfangene Paket nicht in den lokalen Pufferspeicher passt.

2. Verfahren nach Anspruch 1, ferner umfassend das Abrufen und Senden des gespeicherten Pakets, wenn das gespeicherte Paket das nächste Paket in der Abfolge ist, das gesendet werden soll.

3. Verfahren nach Anspruch 1, wobei das Speichern des Pakets im lokalen Pufferspeicher, wenn das Paket in den lokalen Pufferspeicher passt, das Speichern des Pakets in einem Datenfeld zur asynchronen Einfügung und zur synchronen Entnahme im lokalen Pufferspeicher umfasst, wenn das Paket in das Datenfeld zur asynchronen Einfügung und zur synchronen Entnahme im lokalen Pufferspeicher passt.

4. Verfahren nach Anspruch 3, wobei das Speichern des Pakets in einem nicht lokalen Speicher, wenn das Paket nicht in den lokalen Pufferspeicher passt, das Speichern des Pakets in einem Datenfeld zur asynchronen Einfügung und zur synchronen Entnahme in einem nicht lokalen Speicher umfasst, wenn das Paket nicht in das Datenfeld zur asynchronen Einfügung und zur synchronen Entnahme im lokalen Pufferspeicher passt.

5. Verfahren nach Anspruch 4, wobei das Speichern des Pakets in einem Datenfeld zur asynchronen Einfügung und zur synchronen Entnahme in einem nicht lokalen Speicher das Speichern des Pakets in einem Datenfeld zur asynchronen Einfügung und zur synchronen Entnahme in einem statischen Direktzugriffsspeicher umfasst, wenn das Paket nicht in das Datenfeld zur asynchronen Einfügung und zur synchronen Entnahme im lokalen Pufferspeicher passt.

6. Verfahren nach Anspruch 4, ferner umfassend das Abrufen des Pakets am Kopf des Datenfelds zur asynchronen Einfügung und zur synchronen Entnahme im lokalen Pufferspeicher aus dem Datenfeld zur asynchronen Einfügung und zur synchronen Entnahme im lokalen Pufferspeicher und das Senden des Pakets zum nächsten Netzwerkbestimmungsort.

7. Verfahren nach Anspruch 6, ferner umfassend das Kopieren des Pakets am Kopf des Datenfelds zur asynchronen Einfügung und zur synchronen Entnahme im nicht lokalen Speicher aus dem Datenfeld zur asynchronen Einfügung und zur synchronen Entnahme im nicht lokalen Speicher in das Datenfeld zur asynchronen Einfügung und zur synchronen Entnahme im lokalen Pufferspeicher, nachdem das Paket am Kopf des Datenfelds zur asynchronen Einfügung und zur synchronen Entnahme im lokalen Pufferspeicher vom Datenfeld zur asynchronen Einfügung und zur synchronen Entnahme im lokalen Pufferspeicher zum nächsten Netzwerkbestimmungsort gesendet wurde.

8. Vorrichtung, umfassend:
ein Verarbeitungsmodul (104), um Pakete einer Abfolge, die von einem Netzwerk empfangen werden, zu verarbeiten;
ein Element zur Neuanordnung (106), das mit dem Verarbeitungsmodul (104) gekoppelt ist, um Pakete der Abfolge vor der Sendung zu einem nächsten Netzwerkbestimmungsort neu anzuordnen;
einen lokalen Pufferspeicher (110), der mit dem Element zur Neuanordnung (106) gekoppelt ist, um einen oder mehrere Datenfelder zum Neuanordnen von Paketen zu speichern; und
einen nicht lokalen Speicher (112), der mit dem Element zur Neuanordnung (106) gekoppelt ist, um einen oder mehrere Datenfelder zum Neuanordnen von Paketen zu speichern, wenn der lokale Pufferspeicher (110) voll ist;
**dadurch gekennzeichnet, dass** das Element zur Neuanordnung (106) dazu geeignet ist, zu bestimmen, ob ein empfangenes Paket ein nächstes Paket in der Abfolge ist, das gesendet werden soll, und wenn dies der Fall ist, zu veranlassen, dass die Vorrichtung das Paket sendet, und wenn dies nicht der Fall ist, zu veranlassen, dass die Vorrichtung bestimmt, ob das Paket in den lokalen Pufferspeicher (110) passt.

9. Vorrichtung nach Anspruch 8, wobei der nicht lokale Speicher (112) ein statischer Direktzugriffsspeicher ist.

10. Vorrichtung nach Anspruch 8, wobei der lokale Speicher (110) und der nicht lokale Speicher (112) zur Speicherung eines oder mehrerer Datenfelder zur Neuanordnung von Paketen umfassen, dass der lokale Speicher (110) und der nicht lokale Speicher (112) ein oder mehrere Datenfelder zur asynchronen Einfügung und zur synchronen Entnahme, um Pakete neu anzuordnen, speichert.

11. Vorrichtung nach Anspruch 8, ferner umfassend ein Empfangselement (102), das mit dem Verarbeitungsmodul (104) gekoppelt ist, um Pakete vom Netzwerk zu empfangen.

12. Vorrichtung nach Anspruch 8, ferner umfassend ein Sendeelement (108), das mit dem Element zur Neuanordnung (106) gekoppelt ist, um die neu angeordneten Pakete zum nächsten Netzwerkbestimmungsort zu senden.

13. Herstellungsgegenstand, umfassend:
ein maschinenzugängliches Medium, das einen Inhalt umfasst, der bei einem Zugriff durch eine Maschine verursacht, dass die Maschine alle Schritte des Verfahrens nach einem der Ansprüche 1, 2, 3, 4, 6 und 7 durchführt.

14. System, umfassend:
eine Switch Fabric;
einen Netzwerkprozessor nach der Vorrichtung eines der Ansprüche 9, 11 oder 12, der über eine Switch Fabric-Schnittstelle mit der Switch Fabric gekoppelt ist.

15. System nach Anspruch 14, wobei der Netzwerkprozessor ferner einen dynamischen Direktzugriffsspeicher umfasst, der mit dem Verarbeitungsmodul gekoppelt ist, um Daten zu speichern.

## Revendications

1. Procédé comprenant :
la réception (200), en un élément de réordonnancement, d'un paquet qui fait partie d'une séquence de paquets à transmettre dans l'ordre vers une nouvelle destination réseau ;
**caractérisé par**
la détermination (202) de savoir si le paquet reçu est un paquet suivant dans la séquence à transmettre et, si tel est le cas, transmettre (204) le paquet reçu et, si tel n'est pas le cas :
déterminer (206) si le paquet reçu s'adapte dans une mémoire cache locale ;
stocker (208) le paquet reçu dans la mémoire cache locale si le paquet reçu s'adapte dans la mémoire cachet locale ; et
stocker (210) le paquet reçu dans une mémoire non locale si le paquet reçu ne s'adapte pas dans la mémoire cache locale.

2. Procédé selon la revendication 1, comprenant de plus la récupération et la transmission du paquet stocké lorsque le paquet stocké est le paquet suivant dans la séquence à transmettre.

3. Procédé selon la revendication 1, dans lequel le stockage du paquet dans la mémoire cache locale, si le paquet s'adapte dans la mémoire cache locale, comprend le stockage du paquet dans un tableau d'évacuation synchrone, d'insert asynchrone dans la mémoire cache locale si le paquet s'adapte dans le tableau d'évacuation synchrone, d'insert asynchrone dans la mémoire cache locale.

4. Procédé selon la revendication 3, dans lequel le stockage du paquet dans une mémoire non locale, si le paquet ne s'adapte pas dans la mémoire cache locale, comprend le stockage du paquet dans un tableau d'évacuation synchrone, d'insert asynchrone dans une mémoire non locale si le paquet ne s'adapte pas dans le tableau d'évacuation synchrone, d'insert asynchrone dans la mémoire cache locale.

5. Procédé selon la revendication 4, dans lequel le stockage du paquet dans un tableau d'évacuation synchrone, d'insert asynchrone, dans une mémoire non locale comprend le stockage du paquet dans un tableau d'évacuation synchrone, d'insert asynchrone dans une mémoire d'accès aléatoire statique si le paquet ne s'adapte pas dans le tableau d'évacuation synchrone d'insert asynchrone dans la mémoire cache locale.

6. Procédé selon la revendication 4, comprenant de plus la récupération du paquet à la tête du tableau d'évacuation synchrone, d'insert asynchrone dans la mémoire cache locale à partir du tableau d'évacuation synchrone d'insert asynchrone dans la mémoire cache locale et la transmission du paquet vers la destination de réseau suivante.

7. Procédé selon la revendication 6, comprenant de plus la copie du paquet en tête du tableau d'évacuation synchrone, d'insert asynchrone, dans la mémoire non locale du tableau d'évacuation synchrone, d'insert asynchrone dans la mémoire non locale vers le tableau d'évacuation synchrone, d'insert asynchrone dans la mémoire cache locale après transmission du paquet en tête du tableau d'évacuation synchrone, d'insert asynchrone dans la mémoire cache locale depuis le tableau d'évacuation synchrone, d'insert asynchrone dans la mémoire cache locale vers la destination de réseau suivante.

8. Appareil comprenant:
un module de traitement (104) pour traiter des paquets d'une séquence reçue en provenance d'un réseau ;
un élément de réordonnancement (106) couplé au module de traitement (104) pour réordonner les paquets de la séquence avant transmission vers une destination de réseau suivante ;
une mémoire cache locale (110) couplée à l'élément de réordonnancement (106) pour stocker un ou plusieurs tableaux pour réordonner des paquets ; et
une mémoire non locale (112) couplée à l'élément de réordonnancement (106) pour stocker un ou plusieurs tableaux pour réordonner des paquets lorsque la mémoire cache locale (110) est pleine ;
**caractérisé en ce que** l'élément de réordonnancement (106) est adapté pour déterminer si un paquet reçu est un paquet suivant dans la séquence à transmettre et, si tel est le cas, pour faire en sorte que l'appareil transmette le paquet et, si tel n'est pas le cas, pour faire en sorte que l'appareil détermine si le paquet s'adapte dans la mémoire cache locale (110).

9. Appareil selon la revendication 8, dans lequel la mémoire non locale (112) est une mémoire à accès aléatoire statique.

10. Appareil selon la revendication 8, dans lequel la mémoire locale (110) et la mémoire non locale (112) pour stocker un ou plusieurs tableaux pour le réordonnancement des paquets comprend la mémoire locale (110) et la mémoire non locale (112) pour stocker un ou plusieurs tableaux d'insert asynchrone d'évacuation synchrone pour réordonnancer des paquets.

11. Appareil selon la revendication 8, comprenant de plus un élément de réception (102) couplé au module de traitement (104) pour recevoir les paquets en provenance du réseau.

12. Appareil selon la revendication 8, comprenant de plus un élément de transmission (108) couplé à l'élément de réordonnancement (106) pour transmettre les paquets réordonnancés vers la destination réseau suivante.

13. Article de fabrication comprenant :
un support accessible par machine incorporant du contenu qui, lorsqu'une machine y a accès, fait en sorte que la machine effectue toutes les étapes du procédé de l'une quelconque des revendications 1, 2, 3, 4, 6 et 7.

14. Système comprenant :
un tissu commutateur ;
un processeur de réseau selon l'appareil de l'une quelconque des revendications 9, 11 ou 12, couplé au tissu commutateur via une interface tissu commutateur.

15. Système selon la revendication 14, dans lequel le processeur de réseau comprend, de plus, une mémoire à accès aléatoire dynamique couplée au module de traitement pour stocker des données.
